# EUROPEAN PATENT SPECIFICATION

(11) **EP 2 251 959 B1**
(45) Date of publication and mention of the grant of the patent: **11.07.2012**
(21) Application number: 09006561.6
(22) Date of filing: 15.05.2009
(51) Int. Cl.: H02K 3/18, H02K 15/04, H01F 27/28, H01F 41/06

(54) **Group of electrical coils and method for producing such group of coils**
Elektrische Spulengruppe und Verfahren zur Herstellung einer derartigen Spulengruppe
Groupe de bobines électriques et procédé de production de ce groupe de bobines

(43) Date of publication of application: 17.11.2010
(73) Proprietor: Electric Drive Technology AG, 6312 Steinhausen (CH)
(72) Inventor: Lungu, Cornelius, 77830 Bühlertal (DE)
(74) Representative: Durm, Frank

(56) References cited:
- EP-A1- 0 180 359
- EP-A1- 0 371 933
- EP-A2- 1 085 537
- DE-A1- 3 138 624
- FR-A1- 2 609 205
- JP-A- 60 091 603
- JP-A- 2009 071 939

## Description

This invention relates to a method for producing a group of at least two electrical coils, such as those which are used in electrical motors, generators and electromagnets, made out of conductors which are not round wires. The coils according to this invention are realised with conductors of rectangular cross-section in order to achieve superior fill factors. Such groups of coils or windings are well known from the state of the art and are most often realised with rectangular cross-section conductors. These are in most cases made out of copper and typically insulated with materials such as wire enamel.

A major problem with such coils manufactured according to the state of the art is that they can only be satisfactorily realised with thicker conductors, making them more suitable for bigger machines. One of the biggest problems of manufacturing motors or generators with such rectangular section conductors is the special winding technique required, because the rectangular cross-section conductors have preferential bending directions and can only be processed on special machines.

Another problem of such groups of coils with non-round conductors when manufactured according to the state of the art is that several individual coils have to be connected together to realise the complex windings (e.g. phase windings) of an electrical machine. The interconnections (crossovers) between the single coils are often difficult to realise and these can reduce the reliability, performance and cost-effectiveness of the electrical machine.

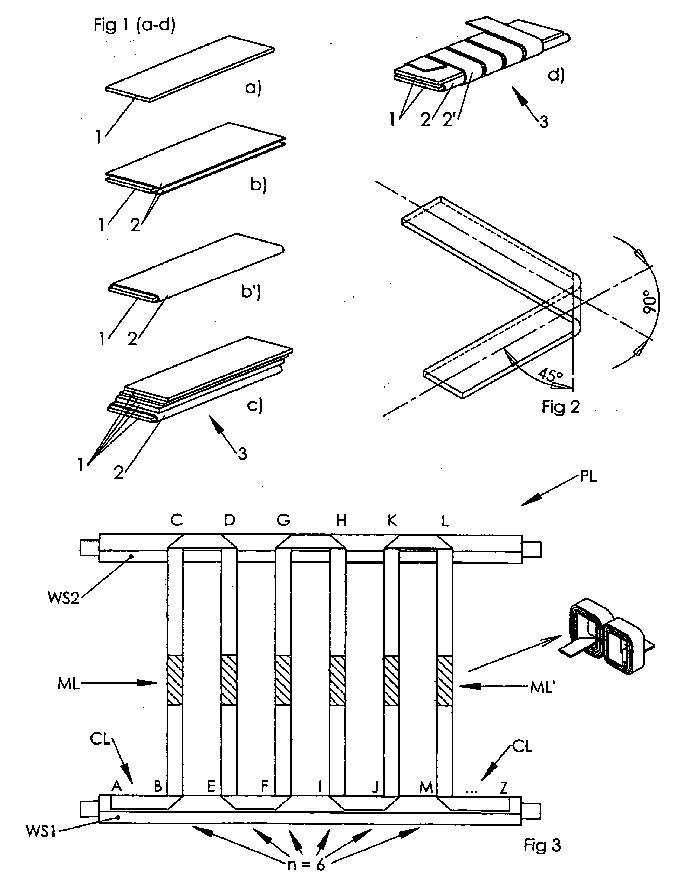

EP 0 371 933 A1 shows a winding method for winding continuously wound coils which includes a step in which the conductors are parallel, e.g. figure 3. The coils are, however, wound before such step.

This invention describes a method for producing windings, especially motor windings, which are made out of groups of coils wound with rectangular cross-section conductors, all of these coils having been made out of a suitably plied single continuous predefined length AZ (Figure 3) of a rectangular cross-section ribbon conductor (1) or several ribbon conductors piled together in a stack (3), see figure 1.

This invention shows how a stack (3) made out of a plurality of thin ribbons (1) must be folded and handled in order to benefit from the fact that a plurality of thin conductors can be much more easily bent round sharp corners than a thick conductor having the same cross section. This is a major advantage of the groups of coils as described in this invention.

Piled conductors may be also favourable at higher frequencies because of the skin effect, which is reduced even if the piled conductors are only slightly insulated by thin oxide layers ("litz-wire"- effect).

According to figure 3 the conductor predefined length A-Z is parted in "n" (n = 6 in Figure 3) portions, which when wound in create a plurality (n) of coils.

The ribbon conductor portions, are placed parallel to each other prior to the winding process and wound together resulting in a group of coils which is composed of a plurality (n) but at least two coils which are perfectly connected with each other.

The perfect connection arises because all of the coils have been manufactured from the same continuous ribbon conductor avoiding the need for crossovers which must be separately connected (e.g welded) to create the group of coils. The rectangular cross-section ribbon conductors are preferably made from copper or aluminium.

It is also an object of this invention to specify how the ribbon conductors 1 which are to be coiled, which are preferably cut from thin metal sheet, may be conveniently stacked in order to achieve the desired cross section of a conductor ribbon stack 3 using only a few shapes of single conductor ribbons 1.

It is also an object of this invention to show how the portions of conductor ribbon 1 or conductor ribbon stacks 3, which interconnect single coils SC or twin coils TC (crossovers), and the beginnings and the ends of these coil groups (connecting leads CL) have to be bent and folded in order to realise crossovers without supplementary joins.

These crossovers, being specially folded as per this invention, permit the spatial, three dimensional placement of single coils SC or twin coils TC which can be inserted onto magnetic yokes MY, so that a desired polarity will result at the pole pieces PP of said magnetic yokes.

It is not a specific matter of the invention how these conductors are insulated from each other. For the sake of clarity we will mention that the preferred insulation is comprised of insulating tapes 2, interleaved with the conductor ribbons, and the way in which this insulating tape is placed with respect to the conductor ribbons 1.

In order to better understand the invention we will begin with the conductor ribbon 1 and the conductor ribbon stacks 3 which are preferably used when implementing this invention.

All of the groups of coils described in this invention can be made with a single or multiple current paths. This means that by winding a conductor ribbon stack 3 (such as that shown in figure 1c) it is possible to have a coil or group of coils with one or more internal current paths, which result from the galvanic separation of the single conductor ribbons 1 or of groups of several conductor ribbons 1 by means of an insulating tape 2, for example. A preferred winding with two current paths is designated a bifilar winding.

Figure 1a represents a single, non-insulated rectangular cross-section conductor ribbon 1 of undefined length which is, for example, cut out of a thin metal sheet and which can have, for example, a thickness h of down to 0,02 mm and a suitable width w which can vary from tenths of millimetres up to decimetres.

Figure 1b, b' represent a similar conductor ribbon 1 which is coated (b) or wrapped (b') with an insulating tape 2. Stacking together several conductor ribbons 1 as represented in the figures 1a and b results in a conductor ribbon stack 3 as shown in figure 1c, this being an example of conductor ribbon stack 3 suitable for a bifilar winding. Here, the first current path is composed of the three upper conductor ribbons 1, while the second current path is the bottom insulated conductor ribbons 1.

The conductor ribbons 1 of the conductor ribbon stack 3 can have different thicknesses, so that a suitable cross-section for each separate current path can be realised. The resulting turns after the coiling process are insulated from each other by the insulating tape 2 and thus they can be connected separately as two galvanically insulated (bifilar) interleaved coils, i.e. two independent current paths are present.

In this case, the insulated conductors 1, (i.e. an insulated current path) act as a turn insulation also for the other not insulated conductors 1, (i.e. another current path).

Figure 1d represents a conductor ribbon stack 3 comprising of one or more conductor ribbons 1, with or without insulating tapes 2. The ribbon stack 3 is additionally wrapped or coated with a second insulating tape 2' in order to provide a supplementary insulation, which may be necessary in particular at the beginning or the end of a coil. Here the material stress is larger due to the sharp bending which results from the necessity of leading the conductor ribbons 1 tightly around a typically sharp-edged magnetic yoke.

In order to realise single coils and groups of coils (complete windings) it is necessary to bend and fold the conductor ribbons in a manner which is suitable for automatic manufacturing, and this way realize terminals or crossovers. This is possible by using typical bend and folding arrangements of ribbon conductor 1 or of ribbon conductor stacks 3, as shown in its most basic form in figure 2. This comprises a bend of usually 45° with respect to the lengthwise axis of the conductor ribbon 1, followed by a firm flat fold (the upside comes down) which renders an usually 90° direction change of the conductor ribbons 1 along their axes, the overlapped portion having about twofold the thickness of the conductor ribbon 1 or of the conductor ribbon stacks 3.

In order to realise a group of n coils (figure 3 shows n=6) out of a single continuous length of a conductor ribbon 1 or conductor ribbon stack 3, a predefined length A-Z of such conductor ribbon 1 or conductor ribbon stacks 3 will be multiply bent and folded as shown in figure 2 so that a planar layout PL arises as shown in figure 3, which represents the unwound form of the future group of coils.

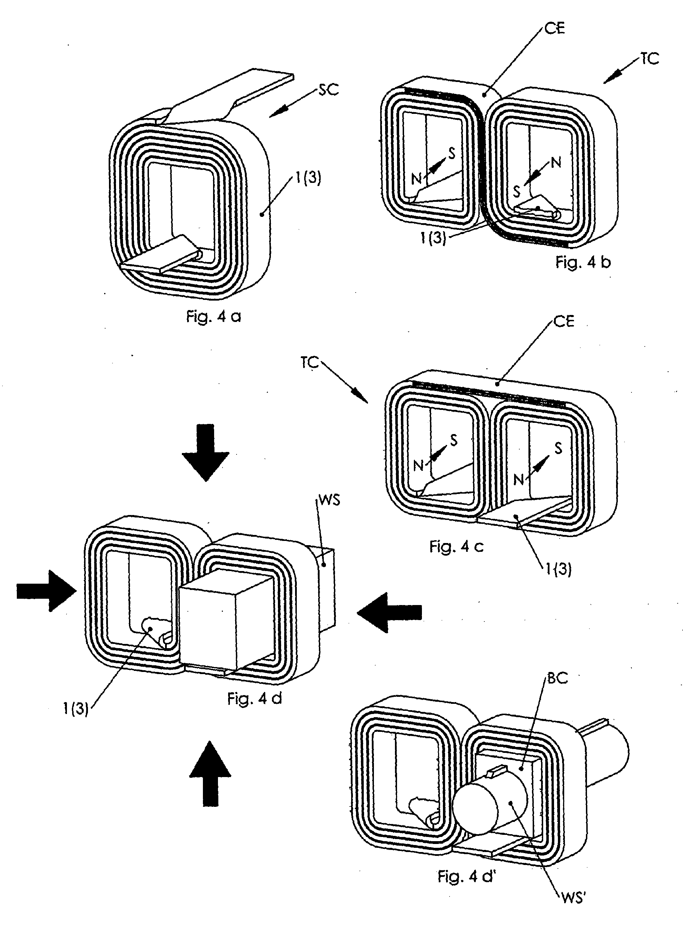

This planar layout PL has lower horizontal portions which will serve as terminals A-B, M-...Z of the first and the last (in this example the sixth) coils in the group. The upper crossovers in the finished group of coils will be formed by portions (C-D, G-H, K-L) and the lower crossovers will be formed by portions E-F, I-J. The six vertical portions B-C, D-E, F-G, H-I, J-K, L-M of the conductor ribbon 1 or of conductor ribbon stacks 3 will be wound as a spiral and form, in this example, six single coils SC or six twin coils TC, as described in figures 4a to 4d. The terminals A and Z (figure 3) serve as connecting leads CL of the group of coils.

To simultaneously wind single coils SC, (Figure 4a) only a lower winding shaft WS1 (Figure 3) of convenient shape must exist and be driven. To produce twin coils TC (Figure 4b, 4c) a second upper winding shaft WS2 is driven together with the lower winding shaft WS1. In this way a plurality n of (in this example n=6) single coils SC or twin coils TC can be produced simultaneously. The preferred shape for the lower and upper winding shafts WS1, WS2 will be chosen to match the desired shape and dimensions of the coil internal bores. For example for square-section coil bores the upper winding shaft WS1 and lower winding shaft WS2 will both have rectangular cross-section.

It is also possible to use separate, appropriately designed bobbin cores BC of a desired (e.g. square) cross-section, which can be mounted on and driven by winding shafts WS'.

Figures 4d and 4d' show these two variants. In the latter case a bobbin core BC is mounted on the winding shaft WS'. After pulling the winding shaft WS' out of the bobbin cores BC, these cores will stay inside the coils for the next manufacturing step or to be used as insulating bobbin carriers for the ready-mounted windings.

The terminals A-B, M-...Z and the crossovers C-D, E-F, G-H, I-J, K-L must be fixed by appropriate means (e.g. clamps, not shown) along one side of the winding shafts WS1, WS2, for the coiling process.

As the single coils SC or twin coils TC which are being realised by simultaneously winding of portions of the same ribbon conductor 1 or conductor ribbon stacks 3 are connected in series, care must be taken that the magnetic polarities of the resulting coils, when energized, correspond to the requirements of the machine or apparatus in which they are to be used.

If the winding process occurs at the lower side of the planar layout PL (Figure 3) by driving only the lower winding shaft WS1, the single coils SC which result from the winding process will have their start at the side of the lower winding shaft WS1 and the ends of the coils will correspond to the upper crossovers C-D, G-H, K-L.

If both the lower and upper sides of the planar layout PL are coiled by driving both the lower and upper winding shafts WS1, WS2, twin coils TC will result. Each resulting coil pair will end with a common portion (outer ends) joining the two halves of the twin coil TC. The common ends CE (see figure 4b, c, represented more clearly with a bold line correspond to the middle portions ML of the length of the vertical portions B-C, D-E, F-G, H-I, J-K, L-M, of the conductor ribbon 1 or conductor ribbon stacks 3 to be coiled.

It is of course necessary that the lower and upper winding shafts WS1, WS2 can move towards each other while winding twin coils TC or single coils SC. Figure 4 represents a single coil SC (a) and two variants of the twin coil TC, (b, c). In the variant shown in figure 4b the winding shafts WS1, WS2 must be driven in the same direction (clockwise), and in the variant shown in figure 4c the winding shafts WS1,WS2 must be driven in opposite directions (clockwise and counter-clockwise respectively).

The twin coils TC (figure 4c) resulting from driving both winding shafts WS1, WS2 in opposite directions will have a common end (bold line) bordering the two coils so that a DC- current which flows through them will produce poles of the same polarity (e.g. South, S) at the same side (front) of the twin coils.
This may not be suitable for some applications.

The twin coils TC (figure4 b) resulting from driving both winding shafts WS1, WS2 in the same direction will have a common end represented with a bold line between the two coils which is diagonal, or S-shaped. This means that the polarities of the magnetic fields resulting from the flow of DC current have convenient polarities; at the same lateral side (e.g. front side) of the coils TC one (half of the twin) coil TC will generate a North (N) magnetic pole and the other (half of the twin) coil TC will generate a South (S) pole. If a magnetic circuit is completed by insertion of a U-shaped yoke, this configuration is suitable for most electromagnetic applications.

The total number of turns in a twin coil TC will be greater than the number of turns for the single coil SC, if they are made from the same length of the ribbon conductor. This is because the mean length of a turn in twin coil TC is shorter (see figure 4 b, c) compared with the mean length of a turn in a single coil (SC), (figure 4a), where the outer turns are evidently longer. But the twin coils TC will have the same electrical resistance as the single coil SC, as the overall length of ribbon conductor is the same in both cases.

With the same current flow, the twin coils TC will therefore produce more Ampère-turns, which in turn means a greater electromagnetic effect than the single coil SC.

This makes twin coil TC arrangements as the preferred embodiment of the invention.

Figure 5 represents a group of two twin coils TC, TC' as they will result from the winding of the portion A-F of a planar layout according to figure 3 on two parallel winding shafts WS1, WS2 with rectangular cross section.

Figure 6 represents a group of coils (a phase winding of a motor) which comprises two twin coils TC-I, TC-r slid onto two U-shaped magnetic yokes MY, MY' (the arrow shows how the yokes are inserted).

The coil terminals and crossovers are bent and folded as shown in this figure prior to the completion of the winding process. Folded and bent in this way, the result is a magnetic circuit having four pole pieces PP1....PP4, (for example as used in electric motors), whereby the pole pieces are the end faces of the U-shaped magnetic yokes MY, MY'.

The pole piece areas are a part of the internal circumference of the stator which surrounds the rotor of the electrical machine.

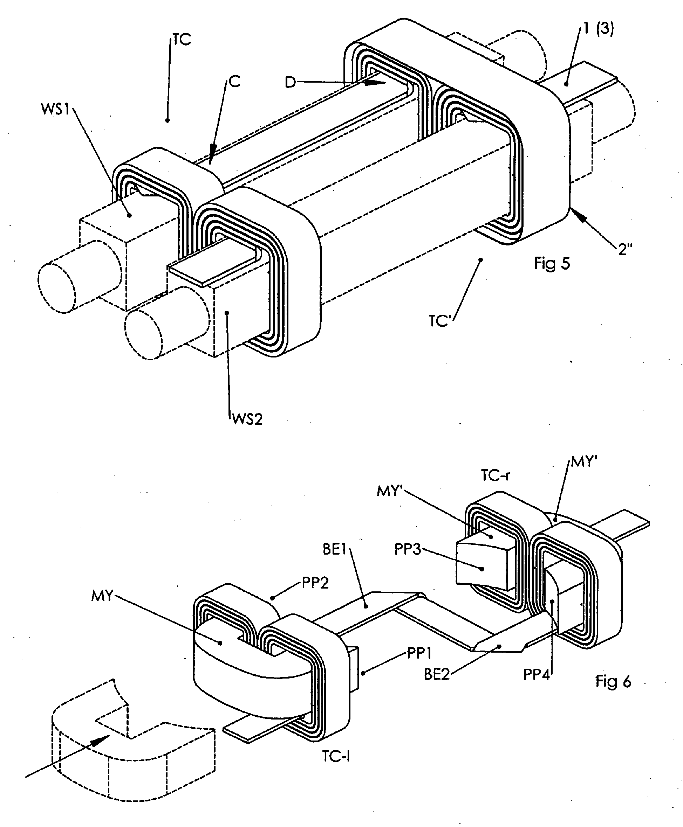

An arrangement such as in figure 6 is especially appropriate for motors and generators, because a rotor rotating between the pole pieces PP1... PP4 (i.e. between the U- shaped magnetic yokes) will pass the pole pieces in the appropriate magnetic sequence (N-S, N-S).

Examples of motors and generators where groups of coils (motor phase windings) as described in this invention can be implemented are described in the international patent application WO 96/09683.

In order to get the configuration according to figure 6, a direct crossover CD like that of figures 3 and 5 must be folded twice (i.e. at the bends BE1, BE2 as show in figure 6) so that magnetic poles of different (North and South) polarity will face each other.

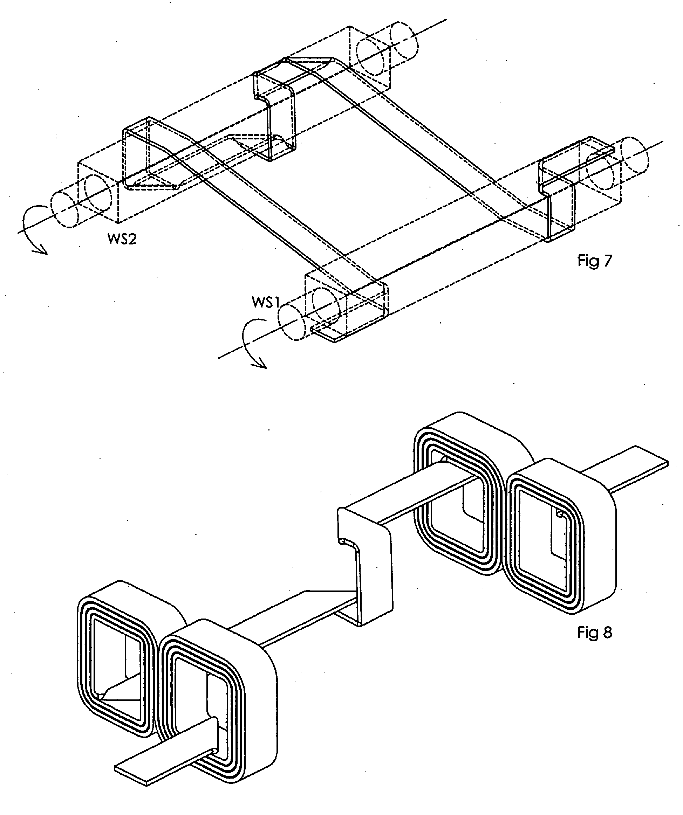

In order to practically realize a group of coils (a phase winding) according to figure 6, it is necessary to begin with a three dimensional layout which is more complicated than shown in figure 3. The required spatial layout SL is represented in figure 7.

The group of coils (phase winding) corresponding to figure 8 is produced by coiling the spatial layout SL represented in figure 7, which will be wound around the winding shafts WS1, WS2 (dotted line). The winding shafts WS1, WS2 are removed after winding.

To create the desired configuration as shown in figure 6 from that shown in figure 8, it is necessary to twist, for example, the right-hand twin coils TC-r one half turn clockwise with respect to the left-hand ones (TC -I). This makes the portion between the bends BE1, BE2 straight and moves the terminals and crossovers to the correct position for suitable connection of the motor windings and the required magnetic polarisation of the pole pieces.

The mass production of the groups of coils (motor phase windings) as according to this invention also has other requirements regarding the shape and the stiffness of coils. Usually conductors, including ribbon conductors 1, have the tendency to spring back after releasing the strain put on them during the winding process.

In order to counteract this tendency, two solutions have proven to be practical: The first solution is to stick the single turns of the winding together.
This can be achieved using usual measures, such as impregnating the coils with resin.

Continuous sticking of the turns produced while winding has proven to be practical. This is realized with a dispenser which applies a small quantity of liquid resin to the ribbon conductors 1 or inside the conductor ribbon stacks 3 during the winding process.

It is also possible to coat the conductor ribbons 1 in advance with an activator, so that the resin which is applied during the winding process cures very quickly.
After the winding process is finished, it is possible to press the resulting single coils SC or twin coils TC with an adequate device, consisting mainly of pressing shoes. These press the above mentioned coils simultaneously from four directions, so that the resulting coil will come closer to a square shape (axial view) and cannot spring back.

The four bold arrows from figure 4d show the direction from which four flat pressing shoes (not represented) press on the four lateral faces of the twin coils TC.

The second way to keep the coils in shape is to secure them with an outer belt, (see figure 5,) which can also be realised using a supplementary insulating tape 2".

The applications described in this invention are simply examples of how to produce this novel kind of windings and do not define any restrictions on the applicability of the invention. The invention can be used in any suitable application to eliminate supplementary connections between single coils, improve manufacturing and reliability of electric machines and to reach superior fill factors.

## Claims

1. Method for producing a group of electrical coils for electromagnetic applications comprising the steps of:
providing at least one piece of a continuous ribbon conductor (1) or a ribbon conductor stack (3) of a predefined single length;
portion said ribbon conductor (1) or ribbon conductor stack (3) in a number (n) of linear conductor portions;
placing said conductor portions parallel to each other prior to the winding process;
winding said conductor portions in order to create a group of coils which is composed of a corresponding number (n) of coils whereby said coils are connected whith each other and are made of the same piece of continuous ribbon conductor (1) or ribbon conductor stack (3).

2. Method according to claim 1 **characterised in that** said number (n) of linear conductor portions are coiled simultaneously beginning from the both ends of that linear portion so that they form multiple coils made of one piece and connected together through a median portion of the initial length of said ribbon conductor.

## Patentansprüche

1. Verfahren zur Herstellung einer Gruppe von elektrischen Spulen für elektromagnetische Zwecke, umfassend die Schritte:
Bereitstellen wenigstens eines Stücks eines durchgehenden Bandleiters (1) oder eines Stapels (3) von Bandleitern mit vorbestimmter einheitlicher Länge;
Aufteilen des Bandleiters (1) oder des Stapels (3) von Bandleitern in eine Anzahl (n) von geraden Leiterabschnitten;
Anordnen der Leiterabschnitte parallel zueinander vor dem Wickeln;
Wickeln der Leiterabschnitte so, dass eine Gruppe von Spulen entsteht, welche aus einer entsprechenden Anzahl (n) von Spulen besteht, wobei diese Spulen untereinander verbunden sind und aus demselben Stück von durchgängigem Bandleiter (1) oder Bandleiter-Stapel (3) gemacht sind.

2. Verfahren nach Anspruch 1, **dadurch gekennzeichnet, dass** die Anzahl (n) von durchgehenden Leiterabschnitten gleichzeitig zu Spulen gewickelt werden, beginnend an den beiden Enden des durchgängigen Abschnitts so, dass sie multiple Spulen bilden, die aus einem einzigen Stück gemacht sind und durch einen mittleren Abschnitt der anfänglichen Länge des Bandleiters miteinander verbunden sind.

## Revendications

1. Procédé de production d'un groupe de bobines électriques pour applications électromagnétiques comprenant les étapes de :
prévision d'au moins une pièce d'un conducteur en ruban (1) continu ou d'une pile de conducteurs en ruban (3) d'une longueur unique prédéfinie ;
partage dudit conducteur en ruban (1) ou de ladite pile de conducteurs en ruban (3) en un nombre (n) de parties linéaires de conducteur ;
mise en place desdites parties de conducteur parallèlement l'une à l'autre avant le processus d'enroulement ;
enroulement desdites parties de conducteur afin de créer un groupe de bobines qui est composé d'un nombre (n) correspondant de bobines, d'où il résulte que lesdites bobines sont connectées les unes avec les autres et sont constituées de la même pièce de conducteur en ruban (1) continu ou de pile de conducteurs en ruban (3).

2. Procédé selon la revendication 1 **caractérisé en ce que** ledit nombre (n) de parties linéaires de conducteur sont bobinées simultanément en commençant aux deux extrémités de cette partie linéaire, de sorte qu'elles forment des bobines multiples constituées d'une pièce et connectées ensemble par l'intermédiaire d'une partie médiane de la longueur initiale dudit conducteur en ruban.
